# EUROPEAN PATENT SPECIFICATION

(11) **EP 4 401 183 B1**
(45) Date of publication and mention of the grant of the patent: **11.03.2026**
(21) Application number: 23382010.9
(22) Date of filing: 10.01.2023
(51) Int. Cl.: H01M 10/04, H01M 10/6554, H01M 50/211, H01M 50/224, H01M 50/227, H01M 50/244, H01M 50/249, H01M 50/264, H01M 50/276, H01M 50/278

(54) **BATTERY MODULE FOR AN ELECTRIC VEHICLE**
BATTERIEMODUL FÜR EIN ELEKTROFAHRZEUG
MODULE DE BATTERIE POUR VEHICULE ELECTRIQUE

(43) Date of publication of application: 17.07.2024
(73) Proprietor: FAGOR EDERBATT S.L., 20540 Eskoriatza (ES)
(72) Inventor: VALORIA GARCIA, Ricardo, 20540 ESKORIATZA (ES); BURGUERA ALBIZURI, Fernando, 48014 BILBAO (ES); APRAIZ ARENAZA, Aitor, 20550 ARETXABALETA (ES); GALAN BASTERRECHEA, Asier, 20577 ANTZUOLA (ES); STÜTZ, Harald, 8130 FROHNLEITEN (AT); UREM, Oliver, 8130 FROHNLEITEN (AT)
(74) Representative: Galbaian S.Coop.

(56) References cited:
- EP-A1- 3 190 642
- EP-A1- 3 340 340
- EP-A1- 3 629 396
- US-A1- 2014 087 231
- US-A1- 2020 220 126
- US-A1- 2022 271 384

## Description

### TECHNICAL FIELD

The present invention relates to battery modules for electric vehicles, and more specifically to modules comprising a casing which houses therein a set of cells.

### PRIOR ART

Electric vehicles are vehicles driven by one or more electric motors that are powered by usually rechargeable electric batteries.

Historically, electric batteries involved high manufacturing costs, a great weight, a long recharge time with a short service life and autonomy, which limited the mass adoption of battery-powered electric vehicles. However, as a result of current technological advances in batteries and environmental regulations, more and more manufacturers are venturing into electric vehicles instead of conventional combustion vehicles.

Electric batteries consist of a plurality of electrochemical cells which convert stored chemical energy into electric current. The cells are stacked in modules, where the vehicles may comprise one or more modules connected to one another. The modules usually comprise an outer casing which houses therein the plurality of cells. The outer casing usually has covers that are welded to one another to form the casing. However, there are also casings the covers of which are fixed to one another by clipping, i.e., without welding and without using additional fixing means.

In this sense, EP3190642 A1 describes a battery module for an electric vehicle which comprises a set of cells comprising a plurality of cells stacked according to a first direction, and a plurality of expandable elements intercalated between the battery cells. The module also comprises a casing which houses therein the set of cells. The casing comprises six covers which are attached and fixed to one another by clipping through the edges thereof, with each cover covering one end of the rectangular prism forming the set of cells.

EP3629396A1 also describes a battery module which comprises a plurality of cells housed in a module housing comprising a lower plate, being the base of the battery module, and two lateral plates extending from the lower plate. Both lateral plates are tilted so that they work as pressing plates. The battery module also comprises a second module housing which works as an upper cover.

US2014087231A1 also describes a battery module which comprises a plurality of cells housed in a casing formed by a clamping strap having a front strap, a rear strap and lateral straps, defining a perimeter housing. The plurality of cells is arranged sandwiched between front and rear compression plates, with the compression plates being arranged inside the perimeter housing of the casing together with the plurality of cells. The battery module also comprises an upper cover and a lower cover.

### DISCLOSURE OF THE INVENTION

The object of the invention is to provide a battery module for an electric vehicle, as defined in the claims.

The battery module of the invention comprises a set of cells comprising a plurality of battery cells stacked according to a first direction, and a plurality of expandable elements intercalated between the battery cells. The module also comprises two lateral compression plates covering a corresponding end of the set of cells according to a second direction perpendicular to the first direction, a casing which houses therein the set of cells. The set of cells is arranged sandwiched between the compression plates.

The casing comprises a front cover and a rear cover such that each cover covers a corresponding end of the set of cells along the first direction. The front cover and the rear cover are attached by side bands, said side bands being arranged according to the second direction, such that the front cover, the rear cover, and the side bands form a perimeter housing in which the set of cells is compressed. The compression plates are arranged inside the perimeter housing of the casing together with the set of cells.

The casing also comprises an upper cover and a lower cover, with the upper cover and the lower cover being fixed to the compression plates. The attachment between the upper cover and the compression plates, and the lower cover and the compression plates is by clipping, the compression plates comprising a plurality of housings, and the upper cover and the lower cover a plurality of flanges, with the flanges of the upper cover and the lower cover being retained in a respective housing of the compression plates.

The battery module of the invention facilitates the assembly of said module since the perimeter housing is configured to retain the set of cells, preventing the cells and the expandable elements from collapsing. Likewise, if one of the cells of the set of cells is to be replaced or repaired, the cells do not collapse when accessing the inside of the casing, since the set of cells is contained and retained in the perimeter housing.

These and other advantages and features of the invention will become apparent in view of the figures and detailed description of the invention.

### DESCRIPTION OF THE DRAWINGS

Figure 1 shows a perspective view of an embodiment of the battery module according to the invention.
Figure 2 shows an exploded view of the battery module of Figure 1.

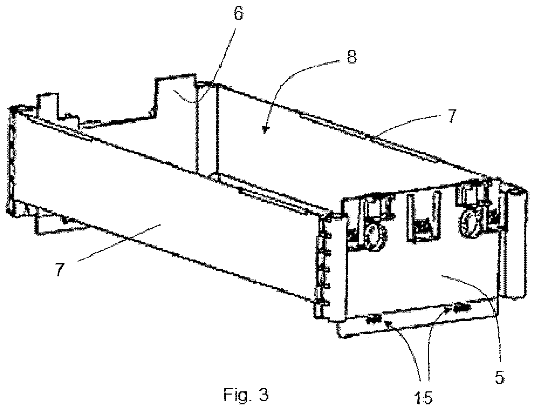

Figure 3 shows the perimeter housing of the battery module of Figure 1 which is formed by the front cover, the rear cover, and the side bands.
Figure 4A shows the set of cells and the compression plates housed in the perimeter housing of the battery module of Figure 1, with the lower cover being assembled and the upper cover not being assembled.
Figure 4B shows the set of cells and the compression plates housed in the perimeter housing of the battery module, with the lower cover being assembled and the upper cover, according to another embodiment of the invention, not being assembled.
Figure 5 shows a sectioned view of the battery module of Figure 1 but without the set of cells.
Figure 6 shows a detail of the sectioned view of Figure 5.
Figure 7 shows a detail of the attachment between the lower cover and the front cover of the battery module of Figure 1.
Figure 8 shows a detail of the attachment between the upper cover and the front cover of the battery module of Figure 1.

### DETAILED DISCLOSURE OF THE INVENTION

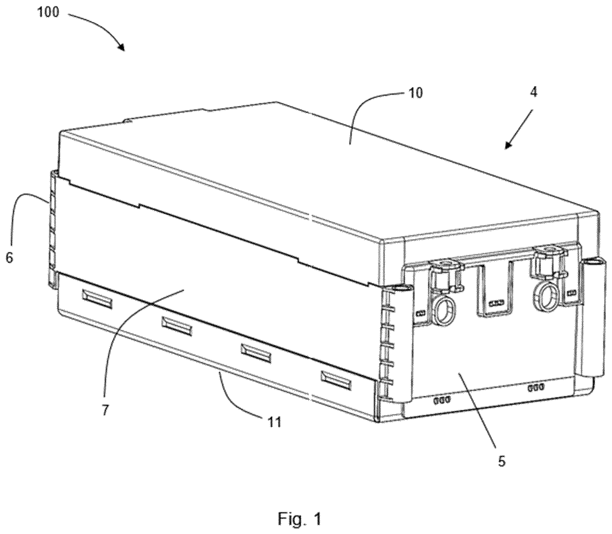

Figure 1 shows an embodiment of the battery module according to the invention. The battery module 100 of the invention is suitable for being used in an electric vehicle, such as a passenger car, a van or pickup, a truck, or even a bus, to drive said vehicle. The battery of the electric vehicle will be formed by a plurality of modules 100 which can be electrically connected in series and/or in parallel.

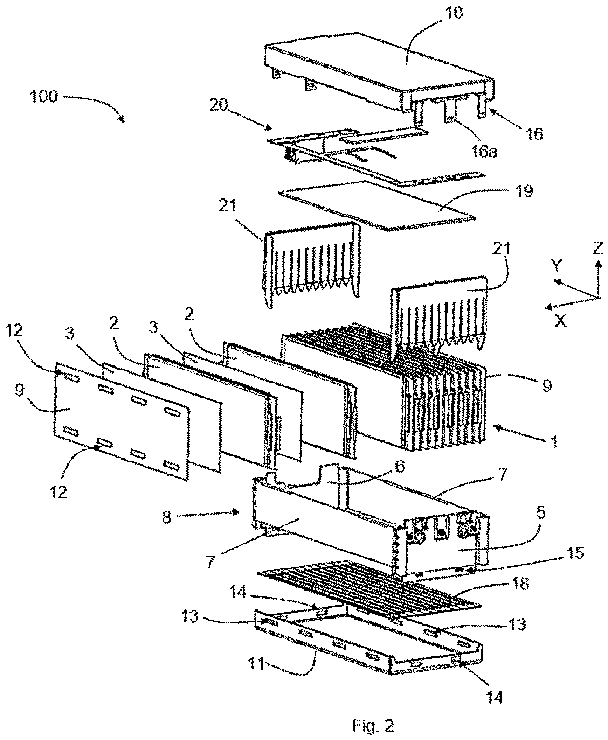

The module 100 of the invention comprises a set of cells 1 comprising a plurality of battery cells 2 stacked according to a first direction X, and a plurality of expandable elements 3 intercalated between the battery cells 2, as shown in Figure 2. The module 100 also comprises a casing 4 which houses therein the set of cells 1. The battery cells 2 are preferably of the type commonly known as pouch cells.

When the module 100 of the invention is in use, the thickness of the cells 2 tends to increase according to the first direction X due to dilations, and the thickness of the expandable elements 3 must be reduced in the same proportion in the first direction X, such that the expandable elements 3 compensate for the deformation experienced by the cells 2.

The casing 4 comprises a front cover 5 and a rear cover 6 such that each cover 5 and 6 covers a corresponding end of the set of cells 1 along the first direction X. The front cover 5 and the rear cover 6 are attached by side bands 7, said side bands 7 being arranged according to a second direction Y perpendicular to the first direction X, such that the front cover 5, the rear cover 6, and the side bands 7 form a perimeter housing 8 in which the set of cells 1 is compressed.

The side bands 7 keep the front cover 5 and the rear cover 6 attached to one another, furthermore creating the perimeter housing 8, with said perimeter housing 8 facilitating the assembly of the battery module 100 since the set of cells 1 is retained in the perimeter housing 8, preventing the cells 2 and the expandable elements 3 from collapsing while the battery module 100 is being constructed. Likewise, if one of the cells 2 of the set of cells 1 is to be replaced or repaired, the cells 2 do no collapse when accessing the inside of the casing 4, since the set of cells 1 is contained and retained in the perimeter housing 8, both in the first direction X and in the second direction Y.

In the preferred embodiment of the invention, the front cover 5, the rear cover 6, and the side bands 7 are formed by a single part, preferably made of plastic, and more preferably glass fiber-based polyamide. Furthermore, said plastic presents several properties such as, for example, being lightweight and fire-resistant. The front cover 5 and the rear cover 6 are rigid due to their thickness, however, the side bands, due to their slender configuration, i.e., due to their length-to-thickness ratio, are configured to allow, on one hand, a slight bending when certain force according to the first direction X is exceeded, facilitating the insertion of the set of cells 1 during the assembly of the module 100 of the invention, and on the other hand, the side bands 7 resist the deformation experienced by the cells 2 in use, so the side bands 7, together with the expandable elements 3, contribute to maintaining the dimensions of the set of cells 1 when the module 100 is in use.

During the assembly of the module 100 of the invention, the set of cells 1 is externally compressed according to the first direction X in order to insert said set of cells 1 in the perimeter housing 8, such that the expandable elements 3 are compressed, with the expandable elements 3 transitioning to a compressed state. When the external force ceases, the expandable elements 3 tend to recover their original position, transitioning to an extended state, such that as a result of the expandable elements 3, the set of cells 1 is adhered to the side bands 7 of the perimeter housing 8, with the side bands 7 being configured to maintain the dimensions of the set of cells 1 whether the module 100 is in use or not.

As discussed above, during the use of the module 100, the expandable elements 3 absorb the deformation of the cells 2 in the first direction X, transitioning to the compressed state, and then, when the module 100 is not in use and the cells 2 tend to recover their original thickness, the expandable elements 3 expand, transitioning to the extended state, ensuring that the set of cells 1 is still adhered to the side bands 7. Said side bands 7 are configured to resist both the expansion force of the expandable elements 3 and the expansion or dilation of the cells 2 in the first direction X.

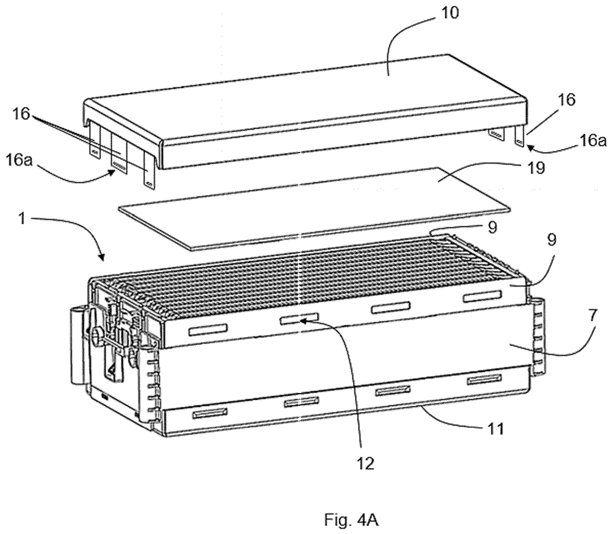

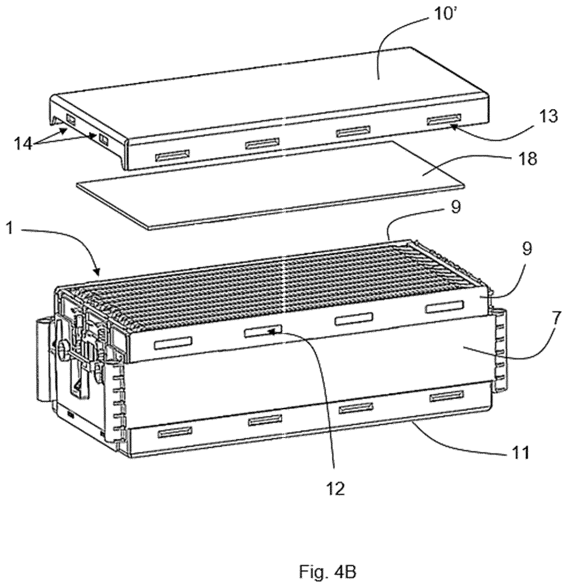

In the preferred embodiment of the invention, the battery module 100 also comprises two lateral compression plates 9 covering a corresponding end of the set of cells 1 according to the second direction Y, such that the set of cells 1 is arranged sandwiched between the compression plates 9, as shown in Figure 2. The compression plates 9 are arranged inside the perimeter housing 8 of the casing 4 together with the set of cells 1, as shown in Figures 4A or 4B.

In the preferred embodiment of the invention, the casing 4 also comprises an upper cover 10 and a lower cover 11, with the upper cover 10 and the lower cover 11 being fixed to the compression plates 9, as will be described in detail below.

The compression plates 9 are therefore removably attached to one another through the upper cover 10 and the lower cover 11, the compression plates 9 also being configured to maintain the dimensions of the set of cells 1. The set of cells 1 is therefore retained by the compression plates 9 and the side bands 7, as described in detail below.

The compression plates 9, which are preferably made of plastic, are configured to resist both the expansion force of the expandable elements 3 in the first direction X, and the expansion or dilation of the cells 2. Therefore, besides facilitating the assembly of the module 100, the side bands 7 also reinforce the function of the compression plates 9, for example, preventing the buckling of the compression plates 9 or preventing the oversizing of the compression plates 9. Therefore, the compression plates 9 and the side bands 7 contribute to maintaining the dimensions of the set of cells 1, together with the expandable elements 3, in a safer and more reliable manner.

In the preferred embodiment of the invention, the attachment between the upper cover 10 and the compression plates 9, and the lower cover 11 and the compression plates 9 is by clipping, as will be described in detail below. In the context of the invention, attachment by clipping refers to a quick-connecting type of attachment wherein the elements forming the casing 4 of the battery module 100 of the invention are attached to one another in a quick and simple manner, without having to use additional fixing means, such as screws or rivets, or welded attachments.

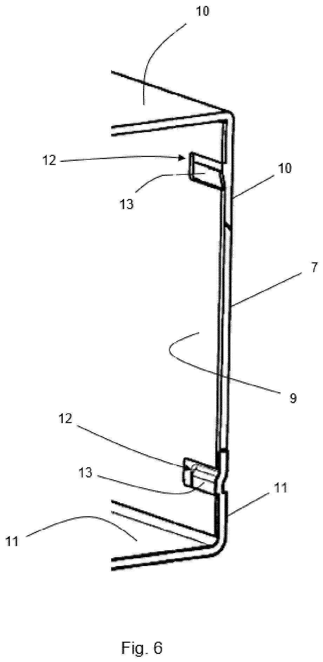

In the preferred embodiment of the invention, each compression plate 9 comprises a plurality of housings 12, as seen for example in Figure 2, and the upper cover 10 and the lower cover 11 comprise a plurality of flanges 13, as seen in the detail of Figure 6, with the flanges 13 of the upper cover 10 and the lower cover 11 being retained in a respective housing 12 of the compression plates 9, as shown in Figure 6. Half of the housings 12 of each compression plate 9 are arranged in the upper portion, i.e., close to the upper cover 10, and the other half in the lower portion, i.e., close to the lower cover 11, as shown in Figure 2.

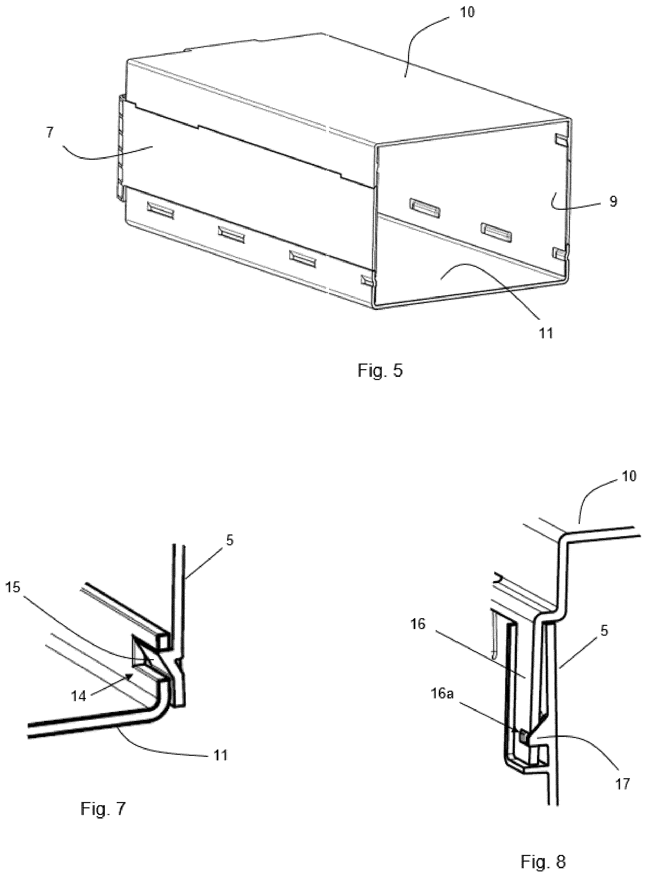

The peripheral edges of the upper cover 10 are bent towards the lower cover 11, such that the cross-section of the upper cover 10 comprises an inverted U shape. The flanges 13 of the upper cover 10 cooperating with the compression plates 9 are arranged inside the respective bent peripheral edge, with the flanges 13 projecting from the inner surface of the peripheral edge, as seen in Figures 5 or 6. In the preferred embodiment of the invention, the upper cover 10 is made of plastic and the flanges 13 are obtained during the process of manufacturing the upper cover 10, i.e., by molding.

The peripheral edges of the lower cover 11 are bent towards the upper cover 10, such that the cross-section of the lower cover 10 comprises a U shape. The flanges 13 of the lower cover 13 cooperating with the compression plates 9 are arranged on the facing peripheral edges cooperating with the compression plates 9, as shown for example in Figures 2 or 5, and they also project towards the inside of the module 100. In the non-limiting example of the figures, the lower cover 11 is metallic, preferably made of aluminum, and the flanges 13 of the lower cover 13 are formed by stamping, i.e., bending part of the peripheral edge towards the inside of the module 100 in order to create the corresponding flange 13, as seen for example in the detail of Figure 6. The material of the lower cover 11 favors heat dissipation when the module 100 is in use. The lower cover 11, with the module 100 being assembled in the vehicle, cooperates with a cooling system, not shown in the figures, such that the cells 2 of the set of cells 1 can be kept within their optimal range of operating temperatures. In cold environments, it is possible that the cells 2 must be heated for them to work within their range of operating temperatures, which would be achieved with the same cooling system that would work in reverse, or with an additional heating system, not shown in the drawings, that would cooperate at least with the lower cover 11.

In a variant of the invention shown in Figure 4B, the upper cover 10' is made of metal and can also cooperate with a cooling system, not shown in the figures. In this case, the flanges 13 cooperating with the compression plates 9 can be obtained by stamping, like in the lower cover 11, but otherwise this cover 10' is similar to the one described above. Therefore, depending on the material of the covers 10, 10', 11, the flanges 13 can be obtained in one way or another.

In another variant of the invention not shown in the drawings, the compression plates 9 may comprise flanges instead of housings, and the lower and upper covers may comprise housings instead of flanges, without altering the concept of the invention.

The upper cover of the invention, according to any of the described embodiments, and the lower cover 11 can also be fixed to the front cover 5 and the rear cover 6, said attachment preferably being by clipping, as described in detail below.

The lower cover 11 comprises a plurality of housings 14, arranged on the bent peripheral edge, and the front cover 5 and the rear cover 6 comprise a plurality of flanges 15 projecting towards the inside of the module 100, with the flanges 15 of the front cover 5 and the rear cover 6 being retained in a respective housing 14 of the lower cover 11, as shown in the detail of Figure 7 in which the fixing between the lower cover 11 and the front cover 5 is shown. In the preferred embodiment of the invention, the front cover 5 and the rear cover 6 are made of plastic, therefore, the flanges 15 are obtained by molding, although other ways for obtaining the flanges 15 are not ruled out.

In the preferred embodiment of the invention, the upper cover 10 comprises a plurality of arms 16, as shown in Figure 4A. Said arms 16 are arranged on the facing peripheral edges cooperating with the front cover 5 and the rear cover 6, and are oriented towards the front cover 5 and the rear cover 6. Each arm 16 comprises a housing 16a and the front cover 5 and the rear cover 6 comprise a plurality of flanges 17, with the flanges 17 of the front cover 5 and the rear cover 6 being retained in a respective housing 16a of the arms 16 of the upper cover 10, as shown in the detail of Figure 8, in which the attachment between the upper cover 10 and the front cover 5 is shown.

In another variant of the invention not shown in the drawings, the arms 16 of the upper cover 10 may comprise flanges instead of housings, and the front cover 5 and the upper cover 6 may comprise housings instead of flanges, without altering the concept of the invention.

In the embodiment of Figure 4B in which the upper cover 10' is made of metal, the upper cover 10' comprises a plurality of housings 14, arranged on the bent peripheral edge, and the front cover 5 and the rear cover 6 comprise a plurality of flanges projecting towards the inside of the module 100, not shown in the figures, with the flanges of the front cover 5 and the rear cover 6 being retained in a respective housing 14 of the upper cover 10'.

Similarly, in another variant of the invention not shown in the drawings, the lower cover 11 and the upper cover 10' of the embodiment of Figure 4B may comprise flanges instead of housings and the front cover 5 and the rear cover 6 may comprise housings instead of flanges to attach the lower cover 11 and the upper cover 10' to the front cover 5 and the rear cover 6, without altering the concept of the invention.

As shown in Figure 1, the front cover 5, part of the upper cover 10 (i.e., part of the bent peripheral edge of the upper cover 10), and part of the lower cover 11 (i.e., part of the bent peripheral edge of the lower cover 11) form the front covering of the casing 4 along the first direction X. The rear cover 6, part of the upper cover 10 (i.e., part of the bent peripheral edge of the upper cover 10), and part of the lower cover 11 (i.e., part of the bent peripheral edge of the lower cover 11) form the rear covering of the casing 4 along the first direction X. Part of the upper cover 10 (the portion which is not bent) forms the upper covering of the casing 4, and part of the lower cover 11 (the portion which is not bent) forms the lower covering of the casing 4. Likewise, the side bands 7, part of the upper cover 10 (i.e., part of the bent peripheral edge of the upper cover 10), and part of the lower cover 11 (i.e., part of the bent peripheral edge of the lower cover 11) form the side coverings of the casing 4 along the second direction Y. In this way, an easy-to-assemble casing 4 which protects the cells 2 from the environment is achieved.

In the preferred embodiment of the invention, as shown in Figure 2, there is arranged between the lower cover 11 and the set of cells 1 a thermal element 18 of the module 100 of the invention with high thermal conductivity, said thermal element 18 helping to dissipate heat generated by the set of cells 1. Said thermal element 18 is a laminar thermal paste covering the end of the set of cells 1 along the first direction X and having high thermal conductivity such that it directs the heat accumulated in the module 100 of the invention to the lower cover 11 for dissipation.

In the preferred embodiment of the invention in which the upper cover 10 is made of plastic, there is arranged between the upper cover 10 and the set of cells 1 at least one expandable element 19 to ensure contact between the upper end of the set of cells 1 and the upper cover 10.

However, in the embodiment of Figure 4B in which the upper cover 10' is made of metal, instead of an expandable element, there is arranged between the upper cover 10' and the set of cells 1 another thermal element 18 having high thermal conductivity to direct part of the accumulated heat to the upper cover 10' for dissipation.

As shown in Figure 2, the module 100 of the invention also comprises at least one connecting element 21 which enables electrical connection between the cells 2 of the set of cells 1. The preferred embodiment of the invention comprises two connecting elements 21, with one connecting element 21 being arranged between the set of cells 1 and the front cover 5 and the other being arranged between the set of cells 1 and the rear cover 6.

Moreover, the module 100 of the invention also comprises a connector 20 to allow the electrical connection of the module 100 with other modules of the vehicle and/or with the connectors and contactors of the battery of the vehicle. In the preferred embodiment of the invention, the connector 20 is arranged between the expandable element 19 and the upper cover 10.

To facilitate the assembly of the module 100 of the invention, the lower cover 11 could be fixed to the front cover 5 and the rear cover 6 in a preliminary step and then the set of cells 1 can be placed with the compression plates 9 inside the perimeter housing 8, and finally, after placing all the components of the module 100, the upper cover 10 or 10' could be placed. In the absence of the preliminary step, the lower cover 11 could be placed once the set of cells 1 and the compression plates 9 have been placed inside the perimeter housing 8.

## Claims

1. Battery module for an electric vehicle which comprises
- a set of cells (1) comprising a plurality of battery cells (2) stacked according to a first direction (X), and a plurality of expandable elements (3) intercalated between the battery cells (2),
- two lateral compression plates (9) covering a corresponding end of the set of cells (1) according to a second direction (Y) perpendicular to the first direction (X), the set of cells (1) being arranged sandwiched between the compression plates (9), and
- a casing (4) which houses therein the set of cells (1),
the casing (4) comprising a front cover (5) and a rear cover (6), with each cover (5, 6) covering a corresponding end of the set of cells (1) along the first direction (X),
the front cover (5) and the rear cover (6) being attached by side bands (7), said side bands (7) being arranged according to the second direction (Y), such that the front cover (5), the rear cover (6), and the side bands (7) form a perimeter housing (8) in which the set of cells (1) is compressed, the compression plates (9) being arranged inside the perimeter housing (8) of the casing (4) together with the set of cells (1), the casing (4) also comprising an upper cover (10; 10') and a lower cover (11), with the upper cover (10; 10') and the lower cover (11) being fixed to the compression plates (9), **characterized in that** the attachment between the upper cover (10; 10') and the compression plates (9), and the lower cover (11) and the compression plates (9) is by clipping, the compression plates (9) comprising a plurality of housings (12), and the upper cover (10; 10') and the lower cover (11) a plurality of flanges (13), with the flanges (13) of the upper cover (10; 10') and the lower cover (11) being retained in a respective housing (12) of the compression plates (9).

2. Battery module according to claim 1, wherein the front cover (5), the rear cover (6), and the side bands (7) are formed by a single part, preferably made of plastic and more preferably of polyamide.

3. Battery module according to claim 1 or 2, wherein the upper cover (10; 10') and the lower cover (11) are also fixed to the front cover (5) and the rear cover (6).

4. Battery module according to claim 3, wherein the attachment between the upper cover (10; 10') and the front cover and the rear cover (5, 6), and the lower cover (11) and the front cover and the rear cover (5, 6) is by clipping.

5. Battery module according to claim 4, wherein the lower cover (11) comprises a plurality of housings (14), and the front cover (5) and the rear cover (6) comprise a plurality of flanges (15), with the flanges (15) of the front cover (5) and the rear cover (6) being retained in a respective housing (14) of the lower cover (11).

6. Battery module according to claim 3 or 4, wherein the upper cover (10) comprises a plurality arms (16), each arm (16) comprising a housing (16a), and the front cover (5) and the rear cover (6) comprise a plurality of flanges (17), with the flanges (17) of the front cover (5) and the rear cover (6) being retained in a respective housing (16a) of the arms (16) of the upper cover (10).

7. Battery module according to any of claims 1 to 6, wherein the front cover (5), part of the upper cover (10; 10'), and part of the lower cover (11) form the front covering of the casing (4) along the first direction (X), the rear cover (6), part of the upper cover (10; 10'), and part of the lower cover (11) form the rear covering of the casing (4) along the first direction (X), part of the upper cover (10; 10') forms the upper covering of the casing (4), and part of the lower cover (11) forms the lower covering of the casing (4).

8. Battery module according to any of claims 1 to 7, wherein the side bands (7), part of the upper cover (10; 10'), and part of the lower cover (11) form the side coverings of the casing (4) along the second direction (Y).

9. Battery module according to any of claims 1 to 8, wherein the lower cover (11) is made of metal, preferably aluminum, with a thermal element (18) which helps to dissipate heat generated by the set of cells (1) being arranged between the lower cover (11) and the set of cells (1).

10. Battery module according to any of claims 1 to 9, wherein the upper cover (10') is made of metal, preferably aluminum, with a thermal element which helps to dissipate heat generated by the set of cells (1) being arranged between the upper cover (10') and the set of cells (1).

11. Battery module according to any of claims 1 to 9, wherein the upper cover (10) is made of plastic, with at least one expandable element (19) being arranged between the upper cover (10) and the set of cells (1).

## Patentansprüche

1. Batteriemodul für ein Elektrofahrzeug, das Folgendes umfasst:
- einen Zellensatz (1), umfassend eine Vielzahl von Batteriezellen (2), die gemäß einer ersten Richtung (X) gestapelt sind, und eine Vielzahl von ausdehnbaren Elementen (3), die zwischen den Batteriezellen (2) eingeschoben sind,
- zwei seitliche Druckplatten (9), die ein entsprechendes Ende des Satzes von Zellen (1) gemäß einer zweiten Richtung (Y) senkrecht zur ersten Richtung (X) abdecken, wobei der Satz von Zellen (1) sandwichartig zwischen den Druckplatten (9) angeordnet ist, und
- ein Gehäuse (4), in dem der Satz von Zellen (1) aufgenommen ist,
wobei das Gehäuse (4) eine vordere Abdeckung (5) und eine hintere Abdeckung (6) umfasst, wobei jede Abdeckung (5, 6) ein entsprechendes Ende des Satzes von Zellen (1) entlang der ersten Richtung (X) abdeckt, wobei die vordere Abdeckung (5) und die hintere Abdeckung (6) durch Seitenbänder (7) befestigt sind, wobei die Seitenbänder (7) gemäß der zweiten Richtung (Y) angeordnet sind, so dass die vordere Abdeckung (5), die hintere Abdeckung (6) und die Seitenbänder (7) eine umlaufende Aufnahme (8) bilden, in der der Satz von Zellen (1) zusammengedrückt ist, wobei die Druckplatten (9) innerhalb der umlaufenden Aufnahme(8) des Gehäuses (4) zusammen mit dem Satz von Zellen (1) angeordnet sind, wobei das Gehäuse (4) auch eine obere Abdeckung (10; 10') und eine untere Abdeckung (11) umfasst, wobei die obere Abdeckung (10; 10') und die untere Abdeckung (11) an den Druckplatten (9) fixiert sind, **dadurch gekennzeichnet, dass** die Befestigung zwischen der oberen Abdeckung (10; 10') und den Druckplatten (9) und der unteren Abdeckung (11) und den Druckplatten (9) durch Einklipsen erfolgt, wobei die Druckplatten (9) eine Vielzahl von Aufnahmen (12) und die obere Abdeckung (10; 10') und die untere Abdeckung (11) eine Vielzahl von Flanschen (13) umfassen, wobei die Flansche (13) der oberen Abdeckung (10; 10') und der unteren Abdeckung (11) in einer jeweiligen Aufnahme (12) der Druckplatten (9) gehalten werden.

2. Batteriemodul nach Anspruch 1, wobei die vordere Abdeckung (5), die hintere Abdeckung (6) und die Seitenbänder (7) aus einem einzigen Teil bestehen, das vorzugsweise aus Kunststoff und noch bevorzugter aus Polyamid hergestellt ist.

3. Batteriemodul nach Anspruch 1 oder 2, wobei die obere Abdeckung (10; 10') und die untere Abdeckung (11) ebenfalls an der vorderen Abdeckung (5) und der hinteren Abdeckung (6) fixiert sind.

4. Batteriemodul nach Anspruch 3, wobei die Befestigung zwischen der oberen Abdeckung (10; 10') und der vorderen Abdeckung und der hinteren Abdeckung (5, 6), und der unteren Abdeckung (11) und der vorderen Abdeckung und der hinteren Abdeckung (5, 6) durch Einklipsen erfolgt.

5. Batteriemodul nach Anspruch 4, wobei die untere Abdeckung (11) eine Vielzahl von Aufnahmen (14) umfasst und die vordere Abdeckung (5) und die hintere Abdeckung (6) eine Vielzahl von Flanschen (15) umfassen, wobei die Flansche (15) der vorderen Abdeckung (5) und der hinteren Abdeckung (6) in einer jeweiligen Aufnahme (14) der unteren Abdeckung (11) gehalten werden.

6. Batteriemodul nach Anspruch 3 oder 4, wobei die obere Abdeckung (10) eine Vielzahl von Armen (16) umfasst, wobei jeder Arm (16) eine Aufnahme (16a) umfasst, und die vordere Abdeckung (5) und die hintere Abdeckung (6) eine Vielzahl von Flanschen (17) umfassen, wobei die Flansche (17) der vorderen Abdeckung (5) und der hinteren Abdeckung (6) in einer jeweiligen Aufnahme (16a) der Arme (16) der oberen Abdeckung (10) gehalten werden.

7. Batteriemodul nach einem der Ansprüche 1 bis 6, wobei die vordere Abdeckung (5), ein Teil der oberen Abdeckung (10; 10') und ein Teil der unteren Abdeckung (11) die vordere Bedeckung des Gehäuses (4) entlang der ersten Richtung (X) bilden, die hintere Abdeckung (6), ein Teil der oberen Abdeckung (10; 10') und ein Teil der unteren Abdeckung (11) die hintere Bedeckung des Gehäuses (4) entlang der ersten Richtung (X) bilden, ein Teil der oberen Abdeckung (10; 10') die obere Bedeckung des Gehäuses (4) bildet und ein Teil der unteren Abdeckung (11) die untere Bedeckung des Gehäuses (4) bildet.

8. Batteriemodul nach einem der Ansprüche 1 bis 7, wobei die Seitenbänder (7), ein Teil der oberen Abdeckung (10; 10') und ein Teil der unteren Abdeckung (11) die Seitenbedeckungen des Gehäuses (4) entlang der zweiten Richtung (Y) bilden.

9. Batteriemodul nach einem der Ansprüche 1 bis 8, wobei die untere Abdeckung (11) aus Metall, vorzugsweise Aluminium, hergestellt ist, mit einem thermischen Element (18), das dazu beiträgt, die von dem Satz von Zellen (1) generierte Wärme abzuführen, und das zwischen der unteren Abdeckung (11) und dem Satz von Zellen (1) angeordnet ist.

10. Batteriemodul nach einem der Ansprüche 1 bis 9, wobei die obere Abdeckung (10') aus Metall, vorzugsweise Aluminium hergestellt ist, mit einem thermischen Element, das dazu beiträgt, die von dem Satz von Zellen (1) generierte Wärme abzuführen, und das zwischen der oberen Abdeckung (10') und dem Satz von Zellen (1) angeordnet ist.

11. Batteriemodul nach einem der Ansprüche 1 bis 9, wobei die obere Abdeckung (10) aus Kunststoff hergestellt ist, wobei mindestens ein ausdehnbares Element (19) zwischen der oberen Abdeckung (10) und dem Satz von Zellen (1) angeordnet ist.

## Revendications

1. Module de batterie pour un véhicule électrique qui comprend
- un ensemble de cellules (1) comprenant une pluralité de cellules de batterie (2) empilées selon une première direction (X), et une pluralité d'éléments expansibles (3) intercalés entre les cellules de batterie (2),
- deux plaques de compression latérales (9) recouvrant une extrémité correspondante de l'ensemble de cellules (1) selon une deuxième direction (Y) perpendiculaire à la première direction (X), l'ensemble de cellules (1) étant disposées en sandwich entre les plaques de compression (9), et
- un boîtier (4) qui loge à l'intérieur l'ensemble de cellules (1),
le boîtier (4) comprenant un couvercle avant (5) et un couvercle arrière (6), chaque couvercle (5, 6) recouvrant une extrémité correspondante de l'ensemble de cellules (1) le long de la première direction (X), le couvercle avant (5) et le couvercle arrière (6) étant attachés par des bandes latérales (7), lesdites bandes latérales (7) étant disposées selon la deuxième direction (Y), de telle sorte que le couvercle avant (5), le couvercle arrière (6), et les bandes latérales (7) forment un logement périmétrique (8) dans lequel est comprimé l'ensemble de cellules (1), les plaques de compression (9) étant disposées à l'intérieur du logement périmétrique (8) du boîtier (4) conjointement avec l'ensemble de cellules (1), le boîtier (4) comprenant en outre un couvercle supérieur (10 ; 10') et un couvercle inférieur (11), le couvercle supérieur (10 ; 10') et le couvercle inférieur (11) étant fixés aux plaques de compression (9), **caractérisé en ce que** l'attachement entre le couvercle supérieur (10 ; 10') et les plaques de compression (9), et le couvercle inférieur (11) et les plaques de compression (9), est réalisé par clipsage, les plaques de compression (9) comprenant une pluralité de logements (12), et le couvercle supérieur (10 ; 10') et le couvercle inférieur (11) une pluralité de brides (13), les brides (13) du couvercle supérieur (10 ; 10') et du couvercle inférieur (11) étant retenues dans un logement (12) respectif des plaques de compression (9).

2. Module de batterie selon la revendication 1, dans lequel le couvercle avant (5), le couvercle arrière (6), et les bandes latérales (7) sont formées par une seule pièce, de préférence en plastique et plus de préférence en polyamide.

3. Module de batterie selon la revendication 1 ou 2, dans lequel le couvercle supérieur (10 ; 10') et le couvercle inférieur (11) sont également fixés au couvercle avant (5) et au couvercle arrière (6).

4. Module de batterie selon la revendication 3, dans lequel l'attachement entre le couvercle supérieur (10 ; 10') et le couvercle avant et le couvercle arrière (5, 6), et le couvercle inférieur (11) et le couvercle avant et le couvercle arrière (5, 6), est réalisé par clipsage.

5. Module de batterie selon la revendication 4, dans lequel le couvercle inférieur (11) comprend une pluralité de logements (14), et le couvercle avant (5) et le couvercle arrière (6) comprennent une pluralité de brides (15), les brides (15) du couvercle avant (5) et du couvercle arrière (6) étant retenues dans un logement (14) respectif du couvercle inférieur (11).

6. Module de batterie selon la revendication 3 ou 4, dans lequel le couvercle supérieur (10) comprend une pluralité de bras (16), chaque bras (16) comprenant un logement (16a), et le couvercle avant (5) et le couvercle arrière (6) comprennent une pluralité de brides (17), les brides (17) du couvercle avant (5) et du couvercle arrière (6) étant retenues dans un logement (16a) respectif des bras (16) du couvercle supérieur (10).

7. Module de batterie selon l'une quelconque des revendications 1 à 6, dans lequel le couvercle avant (5), une partie du couvercle supérieur (10 ; 10'), et une partie du couvercle inférieur (11), forment le recouvrement avant du boîtier (4) le long de la première direction (X), le couvercle arrière (6), une partie du couvercle supérieur (10 ; 10'), et une partie du couvercle inférieur (11), forment le recouvrement arrière du boîtier (4) le long de la première direction (X), une partie du couvercle supérieur (10 ; 10') forme le recouvrement supérieur du boîtier (4), et une partie du couvercle inférieur (11) forme le recouvrement inférieur du boîtier (4).

8. Module de batterie selon l'une quelconque des revendications 1 à 7, dans lequel les bandes latérales (7), une partie du couvercle supérieur (10 ; 10'), et une partie du couvercle inférieur (11) forment les recouvrements latéraux du boîtier (4) le long de la deuxième direction (Y).

9. Module de batterie selon l'une quelconque des revendications 1 à 8, dans lequel le couvercle inférieur (11) est réalisé en métal, de préférence en aluminium, un élément thermique (18) qui aide à dissiper la chaleur générée par l'ensemble de cellules (1) étant disposé entre le couvercle inférieur (11) et l'ensemble de cellules (1).

10. Module de batterie selon l'une quelconque des revendications 1 à 9, dans lequel le couvercle supérieur (10') est réalisé en métal, de préférence en en aluminium, un élément thermique qui aide à dissiper la chaleur générée par l'ensemble de cellules (1) étant disposé entre le couvercle supérieur (10') et l'ensemble de cellules (1).

11. Module de batterie selon l'une quelconque des revendications 1 à 9, dans lequel le couvercle supérieur (10) est réalisé en plastique, au moins un élément expansible (19) étant disposé entre le couvercle supérieur (10) et l'ensemble de cellules (1).
